# EUROPEAN PATENT SPECIFICATION

(11) **EP 2 543 160 B1**
(45) Date of publication and mention of the grant of the patent: **01.01.2014**
(21) Application number: 11706202.6
(22) Date of filing: 17.02.2011
(51) Int. Cl.: H04L 12/24

(54) **METHOD AND SYSTEM FOR OPERATIONS MANAGEMENT IN A TELECOMMUNICATIONS TERMINAL WITH A STATE MACHINE**
VERFAHREN UND SYSTEM ZUR OPERATIONSVERWALTUNG IN EINEM TELEKOMMUNIKATIONSENDGERÄT MIT EINER ZUSTANDSMASCHINE
PROCÉDÉ ET SYSTÈME DE GESTION D'OPÉRATIONS DANS UN TERMINAL DE TÉLÉCOMMUNICATION POURVU D'UNE MACHINE À ÉTATS FINIS

(30) Priority: 05.03.2010 US 310769 P
(43) Date of publication of application: 09.01.2013
(73) Proprietor: Telefónica, S.A., 28013 Madrid (ES)
(72) Inventor: VILLOSLADA DE LA TORRE, Eduardo, E-47007 Valladolid (ES); MARTÍNEZ ELICEGUI, Javier, E-37005 Salamanca (ES); ORTEGA BARRADO, Pedro, José, E-28005 Madrid (ES)
(74) Representative: Carpintero Lopez, Francisco
(86) International application number: PCT/EP2011/052350
(87) International publication number: WO 2011/107347

(56) References cited:
- WO-A2-00/72183
- US-A1- 2004 107 277
- US-A1- 2010 058 329

## Description

### FIELD OF THE INVENTION

The present invention relates to the field of telecommunications and, more in particular it refers to the field of service terminals connected to remote servers.

### STATE OF THE ART

Namely, a Point of Sales (POS) is a system which manages the sale process by means of an accessible interface for sellers, but generally speaking the concept POS is applied to any application from which a sales process is provided. Therefore, the following classification can be done:
- Complete PC Applications, which Basic functions typically are creating and printing out a receipt, ticket or sale invoice, comprising the detailed references and prices of sold articles, updating the level of stock and goods in the database and allowing the authorization for paying with credit/debit cards which will be afterwards transferred to bank entities.
- There could be compact approaches, where all needed elements are integrated in the terminal (CPU, printer, monitor, keyboard) in a unique machine, as well as modular approaches, based in a conventional PC, where different peripherals are connected, together with installed software over a conventional operative system, which allows the use of typical PC functions.
- Dataphones, small size devices, based on a reduced keyboard, various types of card reader (magnetic band, smart card, contactless) and an application software which communicates the remote server party.
- *WebPOS,* where access through an internet browser and a web application to the procedures needed to realize the sale is granted, typically charged to a credit/debit card.
- *mPOS (mobile* POS), where the handset turns into the device to perform the sale transactions. Variants of previous cases can be: a *webPOS* running in the handset or with an added component able to read any kind of card, acting as a dataphone.

Within this classification and focused on dataphones, the current functioning model is that applications run inside the device and when the operation is finished, the transaction data is sent to the server, in order to consolidate data, using for this any data transmission technology.

The outlook of this kind of devices is characterized by the diversity of manufacturers and by the customization of solutions of each manufacturer: they are not open systems over which any one can develop, it is not usual that third parties can develop over POS.

Several initiatives have emerged in order to achieve devices standardization, in such a way that, regardless of the manufacturer, the devices present a common API and developments can be translated in a transparent way from one device to another, from one manufacturer to another, without problems. Among these initiatives it is worth pointing out *STIP* (*Small Terminal Interoperable Platform*)*,* from *GlobalPlatform [http:*//*www.globalplatform.org*/*] or UnifiedPOS [http:*//*www.nrf-arts.org*/*UnifiedPOS*/*].*

STIP is the acronym of *Small Terminal Interoperability Platform.* The STIP consortium is a group of secure transaction solution providers, which includes device manufacturers, smart card manufacturers and others. It was created to define a Java specification for small size terminals and transaction oriented devices.

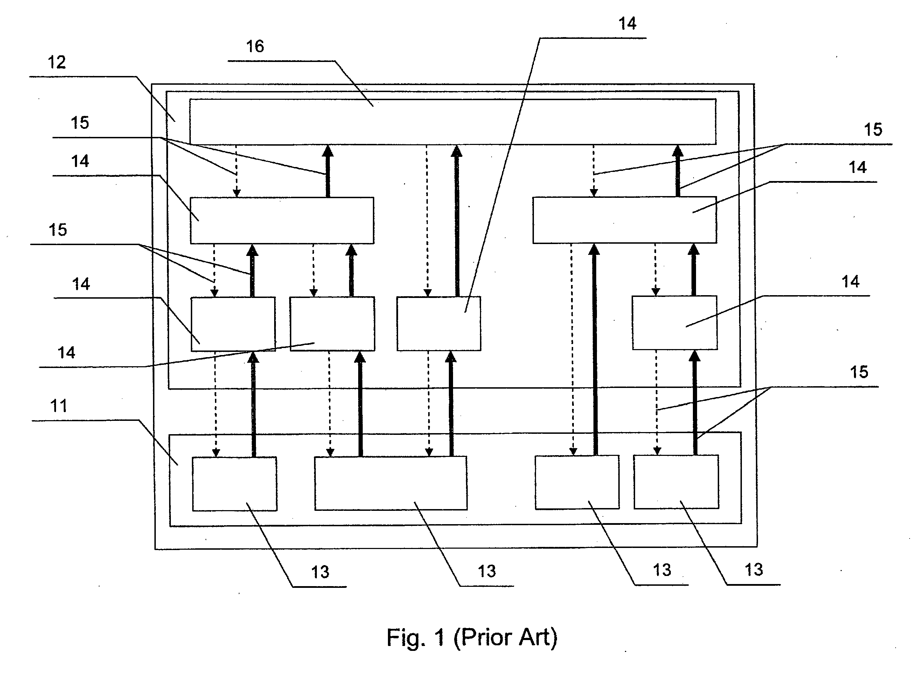

Figure 1 shows the underlying architecture to the STIP technology. Platform 11 exposes, through its software interfaces 15, the interaction capacities that the different elements 13 which compose it have on it, such as the printer, magnetic band reader, the contacless card reader... One application 12 includes a main element 16 which controls the operation of said application 12, and also a set of intermediate services 14, which permit to interact with the platform 11 and its elements 13.

The presented interfaces 15 both by platform elements 13 and by intermediate services of the application 14, follow an approach in which the services generate events as a response to changes in the state of the components, while the application performs requests to the services 14 in order to control their operation.

The goal of STIP is to specify a software platform which provides the following:
- support to many applications of secure transactions in a terminal,
- interoperability for the applications being capable of running in a wide range of devices,
- a method for managing the application life cycle which can be implemented in devices of small size, with limited resources, something usual in the environment of card devices.

The STIP technology fulfils the former functional requirements by means of the following characteristics:
- A common high-level programming language: the basis for interoperability of applications in different hardware platforms is to use a common programming language, regardless of the underlying hardware. The STIP solution relies on the use of objects-oriented languages, such as Java. Furthermore, the STIP technology has defined a sub-set of the most common basis of the Java API in order to provide a common subgroup, which can be used in all platforms, no matter the version of the implemented language.
- Definition of the accesses to resources and common peripherals in small terminals in a portable way: the access to all the resources is made by means of service controls.

The main difficulty is to provide a flexible API which permits several configurations of peripherals and, at the same time, which does not commit and even strengthen security and interoperability. The solution lies on the following approach: each possible resource of the platform (peripherals, storage...) is considered as a service, which is implemented by a software library if it is present in the platform. The STIP API does not provide any direct access to these libraries.

On the other hand, an application can only access to a service control interface 15 standardized for each service. In order to access to and use a service, the application must request the opening of a communication channel between the control of the service it manages and the real service hidden behind it.

Besides, in order to obtain an object of service control of a specific type, the application must first request to the services control manager a service control object of the same type. There are certain advantages which show up when this approach is used:
- When a particular type of service is not present in a determined platform, it is not needed that the platform implements the related service control. The STIP platform only defines the declaration of the service control interface, but not its implementation. This way, interoperability is posible without sacrifying flexibility.
- Applications do not deal with specific service APIs, but with standardized service control APIs. This is important for interoperability, since the libraries can be platform specific, but the interface can be common to all the platforms.
- Security is managed in a comfortable way by the platform, since it is not possible to access any resource without two specific requests from the application. These requests are used to obtain the service control instance and to open through this service control a communication channel with the specific service. This way, the implementations of real services are automatically protected by the platform.

Summarizing, STIP satisfies the needs for flexibility, security and interoperability.

The STIP approach is sustained by the systematic use of a programming style based on events. The underlying mechanisms for requesting events are simple, completely specified and independent from the implementation. This improves the programming of applications highly reactive and, at the same time, enforces security and interoperability of applications.

The usual operation model is that the different execution options are located in the application which exists in the device itself, and in order to update the application, it is necessary to perform maintenance, device per device. This maintenance, either if it is done remotely or locally, is necessary for each device and it has some complexity in the updating process and an increase in cost according to the installed plant.

Thus, it is of special interest to simplify the update of applications which are run in the POS terminal. In this line, the chosen way has been to move the logic of applications from the POS terminal to the server, in such a way that instead of connecting to the server only once the transaction is finished, the POS terminal is connected to the server during intermediate steps, in such a way that the POS terminal can be simpler and applications can be implemented with a degree of flexibility that otherwise would not be possible. This is the main idea under patent US 5696909.

Currently, some related approaches have been proposed, which translate the web applications model for Internet to the operation of a POS terminal; this way, the POS terminal becomes a browser, comprising capacities for interpreting a markup language and managing the resources of the device, making download requests of new pages as far as they are needed.

These proposals imply a step forward in the idea of moving the application control to the server, but still present some limitations:

Patent US 5696909 establishes a general model based on creating an intermediate element which assumes part of the hardware and software capacities of the POS terminal, and a set of predetermined transactions. This does not actually allow a full control from the server comprising the applications which are run in the POS terminal. Furthermore, the frequent interaction with the server could not be bearable in scenarios where communications issues exist, either because of the performance (times of response), or because of the cost of said communications.

In this aspect, one of the already existent mentioned proposals involves a strong restriction in relation to the POS terminal being capable of interpreting its markup language, which implies an important capacity of computation, resulting in a limitation for basic POS terminals.

In summary, the objective technical problem to be solved is optimizing the management of POS terminals or service terminals by using a server that allows the service terminals to download programs of the applications and considering the peculiarities of these terminals when the downloaded programs are used.

US 2010/058329 discloses a method for managing terminal devices in a network by downloading an Operation System (OS) and by configuring the downloaded OS by checking an entire chain of conditions, states of the OS, and transitions between said states. Nonetheless, the download of the OS programs is not triggered by a request from a service terminal, but downloading operation is initiated by a server, which possesses a new version of the OS. The configuration of the downloaded OS is performed in the terminal by using a state machine for checking the aforementioned entire chain of conditions, states and transitions, but this configuration considers no interaction between the terminals and users and no user inputs to configure modules of the terminals (in fact, US 2010/058329 does not consider the possibility of managing a service terminal which has a plurality of modules to be configured).

US 2004/107277 discloses a method for downloading computer programs from a server and for automatically configuring terminals which request the download of a specific program. The server sends the requested programs to its terminals but without consideration of any chain of conditions, program states or transitions between program states. The configuration of the terminals neither considers interaction between terminals and users, nor takes into account user inputs, nor cares of terminals with multiple modules to be configured.

### SUMMARY OF THE INVENTION

The main idea of the present invention is to locate a state machine within the service terminal or POS terminal itself in such a way that it is possible to download from the server the algorithms which must be run for each application. Since the algorithms are hosted by the server and downloaded to the service terminal, the server is able to control at any time all the operations to be done in each service terminal.

The state machine is supported by STIP, where each element in the service terminal has an associated module which controls it and is able to generate the events corresponding to each state transition. In this way, it becomes a generic state machine, where new peripherals can be added, without any changes in the state machine.

The operating model comprises that each event generated by an element in the service/POS terminal, together with all the information associated to that event, are collected by the state machine in order to determine the following action to be performed, based on the algorithm previously downloaded from the server.

With this operation model, the number of requests to the server is minimised, without loosing control by the server, based on the algorithm downloaded to the service/POS terminal. Thus, provided that there are less transactions towards/from the server, with this model, very short communications response times are not needed and the volume of exchanged data is also reduced, keeping during the whole process the flexibility of the applications to be run. This way, the limitations of current solutions are totally overcome.

In a first aspect of the present invention, a method for managing an operation in a service terminal through a remote server is provided, wherein said service terminal comprises a plurality of modules, a state machine, configured for loading algorithms corresponding to applications and running said applications, and, a communications interface configured for communicating with the remote server, wherein said remote server comprises a communications interface configured for communicating with the service terminal and plurality of applications wherein each one of said applications comprises an algorithm defined in such a way that its states, transitions between states and conditions can be transmitted through the communications interface. The method comprises the following steps: sending a request from said service terminal to said remote server to download, at least, one algorithm of, at least, one application; transmitting said, at least, one algorithm from the server to the service terminal and loading it in said state machine; generating an event as a response to a user interaction with one of said modules of the service terminal; associating an information to said event and sending it to the state machine; processing said information in the state machine and obtaining at least one operation to be performed on any of the modules of the service terminal by using said, at least, one algorithm already loaded in the state machine; identifying the module on which said, at least one, operation is intended to be performed and interacting with said module by performing said at least one operation in the service terminal.

Preferably, the information associated to an event comprises: a module identifier for the module which has generated said event and an operation identifier which represents the particular event generated by said module.

This information associated to an event further comprises a plurality of parameters representing additional information data for said event.

In a particular embodiment, each one of said modules comprised in said service terminal is a peripheral module which comprises a control module.

In a possible embodiment, the request to download, at least, one algorithm of, at least, one application is sent when the service terminal is switched on.

Alternatively, the request to download, at least, one algorithm of, at least, one application is sent in particular moments of the day.

Alternatively, the request to download, at least, one algorithm of, at least, one application is done manually by the user through the service terminal.

Alternatively, the request to download, at least, one algorithm of, at least, one application is sent by the service terminal through a connection port also used by the remote server in a postponed moment in time.

Alternatively, the request to download, at least, one algorithm of, at least, one application is sent at the moment of executing an operation in the service terminal for what, said, at least, one application is needed.

In another aspect of the invention, a system, which comprises a plurality of service terminals and a remote server, where the management of operations on each service terminal is performed by the method previously described, is provided.

In a particular embodiment, each one of said service terminals further comprises an applications warehouse configured for storing the algorithms of the applications transmitted from the remote server to the service terminal prior to the load of said algorithms in the states machine.

Finally, a computer program comprising computer program code means adapted to perform the steps of the method previously described when said program is run on a computer, a digital signal processor, a field-programmable gate array, an application specific integrated circuit, a micro-processor, a micro-controller, or any other form of programmable hardware is provided.

### BRIEF DESCRIPTION OF THE DRAWINGS

To complete the description and in order to provide for a better understanding of the invention, a drawing is provided. Said drawing forms an integral part of the description and illustrates a preferred embodiment of architecture for implementing the method of the invention, which should not be interpreted as restricting the scope of the invention, but just as an example of how the invention can be embodied.
Figure 1 illustrates a scheme of the architecture of a STIP technology point of sale.
Figure 2 illustrates a scheme of the architecture of a point of sale terminal and a remote server, according to an embodiment of the present invention.
Figure 3 illustrates a scheme of the architecture of a point of sale terminal with applications warehouse and a remote server, according to an embodiment of the present invention.

### DETAILED DESCRIPTION OF THE INVENTION

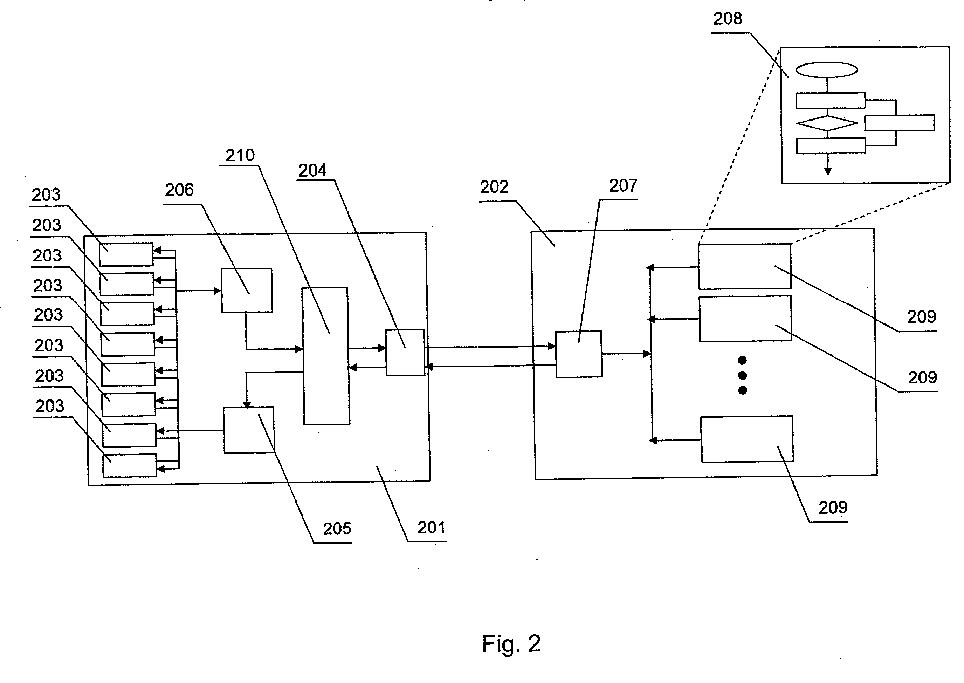

Figure 2 illustrates a scheme of the architecture of an embodiment of the invention. More specifically, in figure 2 a service terminal or point of sale terminal 201 and a remote server 202 are represented.

According to the Small Terminal Interoperability Platform (STIP), it is possible to represent a service terminal or point of sale terminal (POS) 201 as a set of modules 203, each of them having a control element and an element for managing the events. Non-limitative examples of modules 203 which can be included in a POS terminal 201 are: contactless card reader, light emitting diodes, magnetic card readers, Smart Card Slot, keyboard, printer, user interfaces, beeper, transport card, Card Holder Verification, communications, cryptography, date, power supply, timer, file, http, http server and XML.

It can be observed that the service terminal or point of sale terminal 201 also comprises a communications interface 204 configured for communicating with the remote server 202, that is, for managing the communications with it and a state machine 210 for controlling the execution of the algorithm of each application. Figure 2 also shows a control module 205, for interacting and controlling the modules 203 of the POS terminal 201, and an element 206 for capturing and managing the events generated by the modules. These two elements 205 206 are associated to each of the modules 203.

Meanwhile, the server 202 hosts an element or interface 207 for managing the communications with the service/POS terminal 201. Besides, the server 202 comprises the logic 208 of all the applications 209 which are to be run on the server. Thus, the server 202 hosts different applications 209, wherein each of them implements it own algorithm, allowing for total flexibility.

The proposed method for managing an operation in a service/POS terminal 201 comprises the following steps:

Firstly, when the service/POS terminal 201 is switched on, a request is sent to the server 202 in order to download the algorithm corresponding to the application 209 to be run. Within the server, the algorithms of each one of the applications 209 are defined in a formal way, such that its states, transitions between states and conditions can be represented and transmitted to the service terminal 201. Next, the algorithm of the requested application 209, properly formalized, is transmitted from the server 202 to the service terminal 201 and afterwards loaded in the state machine 210. Once the algorithm has been loaded in the state machine 210, the application 209 is ready to be used. When any kind of user interaction occurs in any of the modules 203 comprised in the service/POS terminal 201, an event is generated and captured by the element for managing the events 206. For example, if a key is pressed or if a card is slid at the card reader.

Next, the element for managing the events 206 characterizes the event, associating certain information to it. All this information is sent to the state machine 210.

The state machine 210 receives the information of the event generated in the service/POS terminal 201 and, according to the module 203, the additional data and the state of the application 209, and based on the algorithm of said application 209, its possible states, transitions and conditions, determines which the next step to be performed at the service/POS terminal 201 is. This step is defined in terms of an operation to be done on any of the modules 203 of the POS terminal 201.

The state machine 210 transmits to the control module 205 the operation to be done, on which module 203 and with what parameters. The control module 205 is in charge of interacting with the corresponding module 203, triggering the operation which was determined in the algorithm of the application 209.

This method permits that, making use repeatedly of these steps, any application 209 can be defined as a workflow, which, provided that it was downloaded from the server 202, makes said server to be the one who determines the real operating.

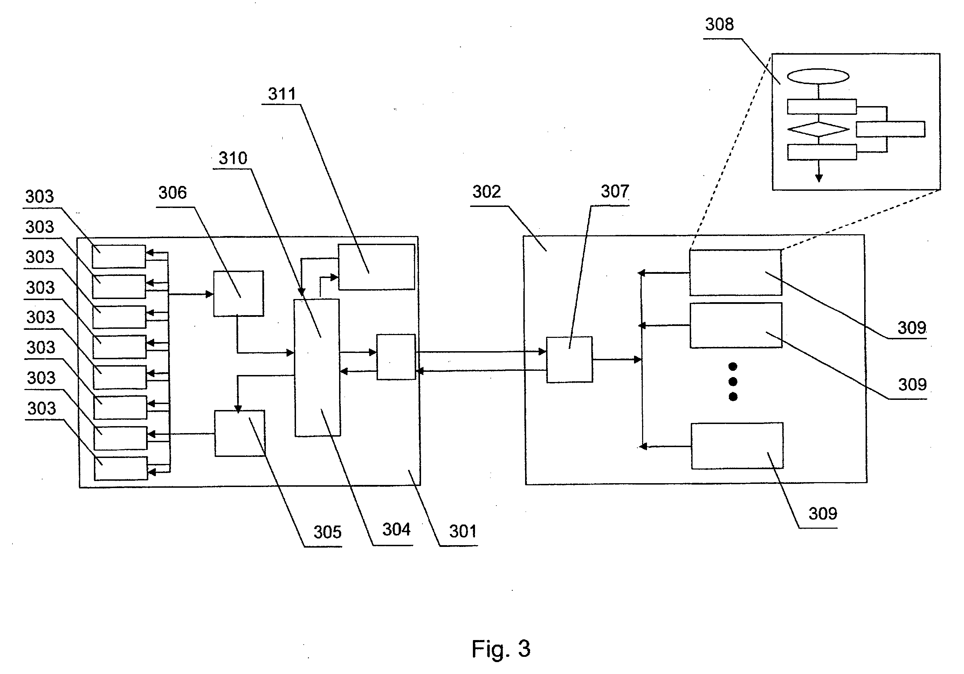

The described scenario is based on the execution of a single application 209 in the service terminal 201. Depending on the complexity of the applications to be managed it could be interesting to load several applications 209 simultaneously in the service/POS terminal 201. For this purpose, as it is shown in figure 3, in another embodiment of the present invention, where the same elements are referred in a similar way to figure 2 (201 301; 203 303, etc.) an additional module, named applications warehouse 311, is incorporated in the service terminal 301, which takes care of the management of the applications 309, defined according to the algorithms which they represent.

In this embodiment, when the POS terminal 301 is switched on, the algorithms of the applications 309 are loaded in the applications warehouse 311 instead of directly in the state machine 310. And when a particular application 309 is intended to be run, the state machine 310 loads its algorithm from the applications warehouse 311 allowing its execution according to the steps previously described.

Additional embodiments of the present invention allow that the algorithm or algorithms of the applications 209 309 are not loaded in the state machine 210 310 or the applications warehouse 311 when the service terminal 201 301 is switched on, but in particular situations, like:
- in particular moments of the day, the service terminal requires the load of said algorithms of the applications 209 309.
- when in the POS terminal 201 301 operations in which the server 202 302 participates are being performed, marking the response in order for the service terminal 201 301 to require the updated load of the application or applications 209 309.
- the user, manually, makes the load request (on demand) for the application or applications 209 309.
- the service terminal 201 301 requires the load of application or applications in a postponed moment of time, through a connection port which is used by the server 202 302.

In any of these cases the service terminal 201 301 stores the list and versions of the applications 209 309 which are already installed and send them to the server 202 302 to minimize the necessary exchange of information, indicating to the server 202 302, what application/s 209 309 to eliminate and what application/s to 209 309 to update.

In summary, an architecture and a method are proposed, which allow total flexibility in the definition of applications which are executed at a POS terminal 201 301, avoiding software modification issues at the POS terminal 201 301.

The proposed architecture is totally generic, relying on the events generation and control elements over peripherals, permitting a customized incorporation of ad-hoc peripherals which are required for each scenario.

Besides, since the algorithm/s of the application/s to be run are downloaded from the server 202 302, an absolute control of the operation which is to be executed at the POS terminal 201 301 is allowed. It is worth to stress that this way, a total customization is achieved for each POS 201 301: it can be considered that each POS terminal 201 or group or POS terminals can have a particular configuration, having different operations from those of other POS terminals 201 or groups of POS terminals. The flexibility is total.

Another advantage, consequence of loading the algorithms of the applications 209 309 at the service terminal 201 301, is that keeping flexibility, communications to the server 202 302 decrease, which involves smaller data volumes to be exchanged and leads to time and cost savings by imposing less restricted response times in communications, making it a suitable solution for scenarios where other alternatives were not, due to the higher number of communications towards the server 201 301 needed.

## Claims

1. A method for managing an operation in a service terminal (201, 301) through a remote server (202, 302), wherein said service terminal (201, 301) comprises a plurality of modules (203, 303), a state machine (210, 310), configured for loading algorithms corresponding to applications and running said applications, and, a communications interface (204, 304) configured for communicating with said remote server (202, 302), wherein said remote server (202, 302) comprises a communications interface (207, 307) configured for communicating with said service terminal (201, 301) and plurality of applications (209, 309) wherein each one of said applications (209, 309) comprises an algorithm (208, 308) defined in such a way that its states, transitions between states and conditions can be transmitted through said communications interface (207, 307),
the method being **characterized by** the following steps:
- sending a request from said service terminal (201, 301) to said remote server (202, 302) to download, at least, one algorithm (208, 308) of, at least, one application (209, 309);
- transmitting said, at least, one algorithm (208, 308) from said server (202, 302) to the service terminal (201, 301) and loading it in said state machine (210, 310);
- generating an event as a response to a user interaction with one of said modules (203, 303) of the service terminal (201, 301);
- associating an information to said event and sending it to the state machine (210, 310);
- processing said information in the state machine (210, 310) and obtaining at least one operation to be performed on any of the modules (203, 303) of the service terminal (201, 301) by using said, at least, one algorithm (208, 308) already loaded in the state machine (210, 310);
- identifying the module (203, 303) on which said, at least one, operation is intended to be performed and interacting with said module (203, 303) by performing said, at least one, operation in the service terminal (201, 301).

2. The method of claim 1, wherein said information associated to an event comprises: a module identifier for the module (203, 303) which has generated said event and an operation identifier which represents the particular event generated by said module (203, 303).

3. The method of claim 2, wherein said associated information further comprises a plurality of parameters representing additional information data for said event.

4. The method of any preceding claim, wherein each one of said modules (203, 303) comprised in said service terminal (201, 301) is a peripheral module which comprises a control module (205, 305).

5. The method of any preceding claim wherein said request to download, at least, one algorithm (208, 308) of, at least, one application (209, 309) is sent when the service terminal (201, 301) is switched on.

6. The method of any of claims from 1 to 4, wherein said request to download, at least, one algorithm (208, 308) of, at least, one application (209, 309) is sent in particular moments of the day.

7. The method of any of claims from 1 to 4, wherein said request to download, at least, one algorithm (208, 308) of, at least, one application (209, 309) is done manually by the user through the service terminal (201, 301).

8. The method of any of claims from 1 to 4, wherein said request to download, at least, one algorithm (208, 308) of, at least, one application (209, 309) is sent by the service terminal (201, 301) through a connection port also used by the remote server (202, 302) in a postponed moment in time.

9. The method of any of claims from 1 to 4, wherein said request to download, at least, one algorithm (208, 308) of, at least, one application (209, 309) is sent at the moment of executing an operation in the service terminal (201, 301) for what, at least, one application is needed.

10. A system which comprises a plurality of service terminals (201, 301) and a remote server (202, 302), the plurality of service terminals (201, 301) being adapted to perform a management of operations according to the steps of the method of any preceding claim.

11. The system of claim 10, wherein each one of said service terminals (301) further comprises an applications warehouse (311) configured for storing the algorithms (308) of the applications (309) transmitted from the remote server (302) to the service terminal (301) prior to the load of said algorithms (308) in the states machine (310).

12. A computer program comprising computer program code means adapted to perform the method according to any claims from 1 to 9 when said program is run on a computer, a digital signal processor, a field-programmable gate array, an application specific integrated circuit, a micro-processor, a micro-controller, or any other form of programmable hardware.

## Patentansprüche

1. Verfahren zum Verwalten einer Operation in einem Service-Terminal (201, 301) durch einen Remote-Server (202, 302), wobei das Service-Terminal (201, 301) eine Mehrzahl von Modulen (203, 303), eine Zustandsmaschine (210, 310), die ausgestaltet ist, um Algorithmen zu laden, die Anwendungen entsprechen, und die Anwendungen laufen zu lassen, und eine Kommunikationsschnittstelle (204, 304) umfasst, die ausgestaltet ist, um mit dem Remote-Server (202, 302) zu kommunizieren, wobei der Remote-Server (202, 302) eine Kommunikationsschnittstelle (207, 307), die ausgestaltet ist, um mit dem Service-Terminal (201, 301) zu kommunizieren, und eine Mehrzahl von Anwendungen (209, 309) umfasst, wobei eine jede der Anwendungen (209, 309) einen Algorithmus (208, 308) umfasst, der auf eine solche Weise definiert ist, dass seine Zustände, Übergänge zwischen Zuständen und Bedingungen durch die Kommunikationsschnittstelle (207, 307) übertragen werden können, wobei das Verfahren durch die folgenden Schritte gekennzeichnet ist:
- Senden einer Anforderung von dem Service-Terminal (201, 301) an den Remote-Server (202, 302), um zumindest einen Algorithmus (208, 308) von zumindest einer Anwendung (209, 309) herunterzuladen;
- Übertragen des zumindest einen Algorithmus (208, 308) von dem Server (202, 302) an das Service-Terminal (201, 301) und Laden desselben in die Zustandsmaschine (210, 310);
- Erzeugen eines Ereignisses als eine Antwort auf eine Benutzerinteraktion mit einem der Module (203, 303) des Service-Terminals (201, 301);
- Zuordnen einer Information zu dem Ereignis und Senden derselben an die Zustandsmaschine (210, 310),
- Verarbeiten der Information in der Zustandsmaschine (210, 310) und Beschaffen zumindest einer Operation, die an irgendeinem der Module (203, 303) des Service-Terminals (201, 301) durchzuführen ist, indem der zumindest eine Algorithmus (208, 308), der bereits in die Zustandmaschine (210, 310) geladen worden ist, verwendet wird;
- Identifizieren des Moduls (203, 303), mit dem die zumindest eine Operation durchgeführt werden soll, und Interagieren mit den Modul (203, 303), indem die zumindest eine Operation in dem Service-Terminal (201, 301) durchgeführt wird.

2. Verfahren nach Anspruch 1,
wobei die Information, die einem Ereignis zugeordnet wird, umfasst: einen Modulidentifikator für das Modul (203, 303), welches das Ereignis erzeugt hat, und einen Operationsidentifikator, der das besondere Ereignis darstellt, das von dem Modul (203, 303) erzeugt wird.

3. Verfahren nach Anspruch 2,
wobei die zugeordnete Information ferner eine Mehrzahl von Parametern umfasst, die zusätzliche Informationsdaten für das Ereignis darstellen.

4. Verfahren nach einem der vorhergehenden Ansprüche,
wobei ein jedes der Module (203, 303), das in dem Service-Terminal (201, 301) enthalten ist, ein Peripheriemodul ist, das ein Steuerungsmodul (205, 305) umfasst.

5. Verfahren nach einem der vorhergehenden Ansprüche,
wobei die Anforderung, zumindest einen Algorithmus (208, 308) von zumindest einer Anwendung (209, 309) herunterzuladen, gesendet wird, wenn das Service-Terminal (201, 301) eingeschaltet wird.

6. Verfahren nach einem der Ansprüche 1 bis 4,
wobei die Anforderung, zumindest einen Algorithmus (208, 308) von zumindest einer Anwendung (209, 309) herunterzuladen, in bestimmten Momenten des Tages gesendet wird.

7. Verfahren nach einem der Ansprüche 1 bis 4,
wobei die Anforderung, zumindest einen Algorithmus (208, 308) von zumindest einer Anwendung (209, 309) herunterzuladen, durch den Benutzer über das Service-Terminal (201, 301) von Hand vorgenommen wird.

8. Verfahren nach einem der Ansprüche 1 bis 4,
wobei die Anforderung, zumindest einen Algorithmus (208, 308) von zumindest einer Anwendung (209, 309) herunterzuladen, von dem Service-Terminal (201, 301) durch einen Verbindungsanschluss, der auch von dem Remote-Server (202, 302) verwendet wird, in einem aufgeschobenen Zeitmoment gesendet wird.

9. Verfahren nach einem der Ansprüche 1 bis 4,
wobei die Anforderung, zumindest einen Algorithmus (208, 308) von zumindest einer Anwendung (209, 309) herunterzuladen, in einem Moment der Ausführung einer Operation in dem Service-Terminal (201, 301), für welche zumindest eine Anwendung benötigt wird, gesendet wird.

10. System, das eine Mehrzahl von Service-Terminals (201, 301) und einen Remote-Server (202, 302) umfasst, wobei die Mehrzahl von Service-Terminals (201, 301) angepasst ist, um eine Verwaltung von Operationen gemäß den Schritten des Verfahrens nach einem der vorhergehenden Ansprüche durchzuführen.

11. System nach Anspruch 10,
wobei ein jedes der Service-Terminale (301) ferner ein Anwendungs-Warehouse (311) umfasst, das ausgestaltet ist, um die Algorithmen (308) der Anwendungen (309), die von dem Remote-Server (302) an das Service-Terminal (301) übertragen werden, vor dem Laden der Algorithmen (308) in die Zustandsmaschine (310) zu speichern.

12. Computerprogramm, das ein Computerprogramm-Codemittel umfasst, das angepasst ist, um das Verfahren nach einem der Ansprüche 1 bis 9 durchzuführen, wenn das Programm auf einem Computer, einem digitalen Signalprozessor, einem Field Programmable Gate Array, einem anwendungsspezifischen integrierten Schaltkreis, einem Mikroprozessor, einem Mikrocontroller oder irgendeiner anderen Form von programmierbarer Hardware laufen gelassen wird.

## Revendications

1. Procédé permettant de gérer une opération dans un terminal de services (201, 301) par le biais d'un serveur distant (202, 302), dans lequel ledit terminal de services (201, 301) comprend une pluralité de modules (203, 303), une machine à états (210, 310), configurée pour charger des algorithmes correspondant à des applications et exécuter lesdites applications, et, une interface de communication (204, 304) configurée pour communiquer avec ledit serveur distant (202, 302), dans lequel ledit serveur distant (202, 302) comprend une interface de communication (207, 307) configurée pour communiquer avec ledit terminal de services (201, 301) et la pluralité d'applications (209, 309), chacune desdites applications (209, 309) comprenant un algorithme (208, 308) défini de manière à ce que ses états, les transitions entre les états et les conditions puissent être transmis par le biais de ladite interface de communication (207, 307),
le procédé étant **caractérisé par** les étapes suivantes :
- envoi d'une requête depuis ledit terminal de services (201, 301) vers ledit serveur distant (202, 302) pour télécharger, au moins, un algorithme (208, 308) d'au moins une application (209, 309) ;
- transmission dudit, au moins, un algorithme (208, 308) depuis ledit serveur (202, 302) vers le terminal de services (201, 301) et son chargement dans ladite machine à états (210, 310) ;
- génération d'un événement en tant que réponse à une interaction d'un utilisateur avec l'un desdits modules (203, 303) du terminal de services (201, 301) ;
- association d'une information avec ledit événement et envoi de celle-ci à la machine à états (210, 310) ;
- traitement de ladite information dans la machine à états (210, 310) et obtention d'au moins une opération à réaliser sur l'un quelconque des modules (203, 303) du terminal de services (201, 301) en utilisant ledit, au moins, un algorithme (208, 308) déjà chargé dans la machine à états (210, 310) ;
- identification du module (203, 303) sur lequel ladite, au moins une, opération est destinée à être réalisée et interaction avec ledit module (203, 303) en réalisant ladite, au moins une, opération dans le terminal de services (201, 301).

2. Procédé selon la revendication 1, dans lequel ladite information associée à un événement comprend : un identifiant de module pour le module (203, 303) qui a généré ledit événement et un identifiant d'opération qui représente l'événement particulier généré par ledit module (203, 303).

3. Procédé selon la revendication 2, dans lequel ladite information associée comprend en outre une pluralité de paramètres représentant des données d'information additionnelles pour ledit événement.

4. Procédé selon l'une quelconque des revendications précédentes, dans lequel chacun desdits modules (203, 303) compris dans ledit terminal de services (201, 301) est un module périphérique qui comprend un module de commande (205, 305).

5. Procédé selon l'une quelconque des revendications précédentes, dans lequel ladite requête visant à télécharger, au moins, un algorithme (208, 308) d'au moins une application (209, 309) est envoyée lorsque le terminal de services (201, 301) est mis en marche.

6. Procédé selon l'une quelconque des revendications 1 à 4, dans lequel ladite requête visant à télécharger, au moins, un algorithme (208, 308) d'au moins une application (209, 309) est envoyée à des moments particuliers de la journée.

7. Procédé selon l'une quelconque des revendications 1 à 4, dans lequel ladite requête visant à télécharger, au moins, un algorithme (208, 308) d'au moins une application (209, 309) est effectuée manuellement par l'utilisateur par le biais du terminal de services (201, 301).

8. Procédé selon l'une quelconque des revendications 1 à 4, dans lequel ladite requête visant à télécharger, au moins, un algorithme (208, 308) d'au moins une application (209, 309) est envoyée par le terminal de services (201, 301) par le biais d'un port de connexion également utilisé par le serveur distant (202, 302) à un moment différé dans le temps.

9. Procédé selon l'une quelconque des revendications 1 à 4, dans lequel ladite requête visant à télécharger, au moins, un algorithme (208, 308) d'au moins une application (209, 309) est envoyée au moment de l'exécution d'une opération dans le terminal de services (201, 301) pour laquelle, au moins, une application est nécessaire.

10. Système qui comprend une pluralité de terminaux de services (201, 301) et un serveur distant (202, 302), la pluralité de terminaux de services (201, 301) étant adaptée pour réaliser une gestion d'opérations selon les étapes du procédé selon l'une quelconque des revendications précédentes.

11. Procédé selon la revendication 10, dans lequel chacun desdits terminaux de services (301) comprend en outre un entrepôt d'applications (311) configuré pour stocker les algorithmes (308) des applications (309) transmis depuis le serveur distant (302) vers le terminal de services (301) préalablement au chargement desdits algorithmes (308) dans la machine à états (310).

12. Programme informatique comprenant un moyen de code de programme informatique adapté pour réaliser le procédé selon l'une quelconque des revendications 1 à 9 lorsque ledit programme est exécuté sur un ordinateur, un dispositif de traitement de signaux numériques, un réseau de portes programmable, un circuit intégré à application spécifique, un microprocesseur, un microcontrôleur, ou n'importe quelle autre forme de matériel programmable.
